**Europäisches Patentamt**

**European Patent Office**

**Office européen des brevets**

(19)

(11) Publication number: **0 153 032**
**B1**

(12) # EUROPEAN PATENT SPECIFICATION

(45) Date of publication of patent specification: **01.06.88**

(51) Int. Cl.⁴: **B 60 P 1/02, B 60 P 1/04**

(21) Application number: **85300494.3**

(22) Date of filing: **24.01.85**

(54) **Goods distribution vehicle.**

(30) Priority: **26.01.84 GB 8402077**

(43) Date of publication of application:
**28.08.85 Bulletin 85/35**

(45) Publication of the grant of the patent:
**01.06.88 Bulletin 88/22**

(84) Designated Contracting States:
**BE DE FR GB IT NL**

(56) References cited:
**WO-A-80/01553**
**WO-A-83/00666**
**AU-A- 51 852**
**DE-A-2 540 189**
**DE-A-2 806 168**
**FR-A-2 326 376**
**GB-A-1 602 738**
**US-A-2 461 927**
**US-A-3 796 457**

(73) Proprietor: **J. SAINSBURY LIMITED**
**Stamford House Stamford Street**
**London SE1 9LL (GB)**

(73) Proprietor: **ASCHE LIMITED**
**7 Baring Road**
**Beaconsfield Bucks HP9 2NB (GB)**

(72) Inventor: **Christmas, Brian James**
**Rylin Theydon Park Road**
**Theydon Bois Essex (GB)**
Inventor: **Bews, John Gordon**
**The Walled Garden Trout Stream Way**
**Loudwater**
**Rickmansworth Hertfordshire (GB)**
Inventor: **Korinek, Jan**
**9 Tollbar Avenue Bottesford**
**Nottingham Nottinghamshire (GB)**

(74) Representative: **Palmer, Roger et al**
**Page, White and Farrer 5 Plough Place New**
**Fetter Lane**
**London EC4A 1HY (GB)**

EP 0 153 032 B1

Courier Press, Leamington Spa, England.

## Description

The present invention relates to vehicles for goods distribution and transportation.

The invention is particularly applicable to distribution vehicles such as lorries, trailers or semi-trailers for use in distributing goods in packaged form. Such vehicles comprise a housing within which goods may be loaded or unloaded through one or more access openings. Such access openings are commonly provided at the rear of the vehicle.

The invention is particularly applicable to vehicles for transportation and/or distribution of goods, such as food, household items, clothing and similar products. It is desirable to facilitate loading and unloading of such goods into a vehicle for distribution and at the same time to make efficient use of the internal space within the vehicle housing and thereby of the load carrying capacity of the vehicle. Commonly distribution vehicles are used to convey such goods from one or more central warehouses to a variety of distribution points such as supermarket stores. To assist loading the goods they are frequently packed into mobile pallets or trays having wheels such that they may be rolled into and out of the vehicle. It is common practice for such goods to be loaded at a warehouse from a loading bay or dock which is raised above the ground so that the goods in pallets, trays or other packaged form can be fed directly from a loading dock onto the floor of the vehicle. It is commonly necessary for an operator to lift one pallet, crate or package onto another if the goods are to be stacked in more than one layer in the interior of the vehicle housing.

Furthermore, in the case of semi-trailers which consist of a trailer unit for attachment to a tractor unit by use of an articulated connection, the housing on the trailer unit commonly has two floor regions of different levels. The front floor region adjacent the articulated joint is commonly raised above the rear floor region in order to accommodate the vehicle coupling below the floor of the front region of the trailer. In such cases it is necessary to pack goods within the vehicle housing on two different floor levels within the vehicle housing. The floor level of the front region of such a semi-trailer unit is normally fixed at a standard height to accommodate standard vehicle connections with trailer units. Similarly the loading dock height used at goods loading stations are frequently at a standard height to facilitate loading. The dock loading height may not necessarily correspond with the floor levels in the front and rear regions of such trailer units.

It is an object of the present invention to provide an improved goods transportation or distribution vehicle having more than one floor level with means for simplifying loading and unloading while utilising more than one tier within the housing.

British Patent Specification GB-A-1602738 shows a trailer housing with a raisable platform but it would not be suitable for use in a semi-trailer with two different floor levels. The platform cannot be tilted and when lowered it engages the floor of the housing and does not provide sufficient safety factors.

German Specification DE-A-2540189 shows a trailer unit in accordance with the first part of claim 1, with a split level floor but there is no provision for using a platform as a tilted ramp to load the forward floor region.

The present invention provides a vehicle for distributing and transporting goods, said vehicle having a housing providing an enclosure with a rear access opening to permit loading and unloading of goods, said housing being provided with a floor on which goods may be loaded, said floor comprising a front region at a first level and a rear region at a second lower level, and a platform providing an additional support within the housing on which goods may be loaded, said platform being adjustable in height between a lowered position in which goods may be loaded or unloaded through said access opening onto or from said platform, and a raised position thereby permitting more than one tier of goods within the housing, support means fixed relative to said housing for supporting the front and rear ends of the platform when in the raised position, including first drive means for lifting the front of the platform and second drive means for lifting the rear of the platform, the first and second drive means being arranged to provide different extent of travel for the front and rear of the platform whereby in the raised position the platform may be horizontal providing an additional support level and in the lowered position the platform may be tilted with the front of the platform adjacent said first level spaced above the second level to permit use of the platform in loading onto the front region of the floor from a loading level at the rear of the vehicle which is not level with said front region of the floor.

Preferably locking means is arranged to provide a stop device movable between an extended position in which it holds the platform in the raised position and a retracted position in which the platform is free to be moved from the raised to the lowered position, said stop device including means to prevent retraction to allow lowering of the platform until said drive means applies upward lift to the platform.

By such an arrangement, the platform may be positively held in the raised position without relying on continued application of upward lift by the drive means. The positive locking cannot be removed until upward lift is applied by the drive means. This provides additional safety to permit working by an operator below the raised platform in order to pack more goods onto the floor of the housing.

Preferably said drive means includes one or more hydraulic piston and cylinder devices and preferably four piston and cylinder devices are provided, two on each side of the platform. Other suitable drive means may be employed such as pneumatic, electrical, or mechanical such as screw jacks or a chain drive on each side of the platform.

Preferably the platform is movable substantially vertically up and down relative to a plurality of upstanding support elements fixed within the housing. Preferably the support means include guide means for guiding the upwards and downwards movement of the platform.

Preferably the stop devices each comprise a retractable locking pin mounted on said support elements.

Preferably the platform comprises a base with side members. The side members may be upstanding for use in retaining a plurality of goods on said platform. Preferably said access opening is at the rear of the vehicle and the platform is provided with a movable rear wall which may be moved to permit unobstructed access to the platform to allow rolling access for goods onto the platform when in the lowered position and may be moved to provide a retaining wall to maintain goods on the platform after loading.

Preferably each said locking pin has an inner end arranged to extend inwardly past a mating part of the platform or a member carried thereby, when extended.

Preferably each locking pin has at its inner end a projection arranged, when the pin is extended, to engage said mating part of the platform or member carried thereby and to prevent retraction of the pin until the platform is moved to clear the projection by application of upward lift by the said drive means. Preferably said pins are urged by spring means to said extended position.

Preferably pneumatic means are provided to retract the locking pins against said spring means when it is required to lower a platform from said raised position. Preferably the locking pins are provided with a tapered surface at said inner end to permit movement of the pins to the retracted position by upward movement of the platform past said pins.

Preferably the front of the platform is aligned with the level of said front region of the floor when the platform is lowered, to permit access, preferably rolling access, via the platform onto said front region of the floor.

Preferably the drive means at the rear of the platform has a greater extent of travel than the drive means at the front of the platform to allow the rear of the platform to lie in a position above the floor but lower than the front of the platform when the platform is lowered.

Preferably switch means is located so as to respond to movement of the rear end of the platform, said switch means being arranged to control operation of the drive means which lifts the front of the platform so that when raising the platform the drive means acting on the front of the platform is actuated after a predetermined extent of travel of the rear of the platform.

Preferably the platform is provided with roller means for engaging guide means to assist in guiding the platform movement.

Preferably said roller means is arranged to locate the position of the platform in the longitudinal direction of the vehicle. Preferably locating means are provided between said support elements and the platform to locate the platform in a lateral position when in the raised and lowered positions.

Preferably said housing is provided with apertures adjacent said locking pins and the pins are arranged to extend outwardly through said apertures when the pins are disengaged from the platform whereby an operator can detect from outside the housing whether the pins are engaged with the platform.

The invention is particularly applicable to distribution lorries or trailers or semi-trailers.

The invention will now be described by way of example and with reference to the accompanying drawings in which:

Figure 1 is a side view of a goods distribution vehicle showing the interior with a lifting platform in accordance with the present invention,

Figure 2 shows in more detail one support member and part of the platform of Figure 1,

Figure 3 is a scrap section on the line 3-3 in Figure 1,

Figure 4 is a scrap section on the line 4-4 in Figure 1,

Figure 5 is a similar scrap section taken on the line 5-5 in Figure 1,

Figure 6 is a side view of a locking pin arrangement used in Figure 1,

Figure 7 is a sectioned view of a guide roller and bearing pad arrangement used on the platform of Figure 1,

Figure 8 is a front view of a control unit used in the vehicle of Figure 1, and Figure 9 is a flow diagram of an hydraulic circuit used in the vehicle of Figure 1.

The goods distribution vehicle of this particular example consists of a semi-trailer unit 11 arranged for connection via an articulated joint 12 to a tractor unit at the front end of the vehicle. The semi-trailer of this example has three rear axles 13, 14 and 15 together with retractable support legs 16 at the front end. The vehicle has a hollow enclosed body formed by a generally rectangular housing 17 to which access is provided through a rear opening 18 closable by rear doors or shutters in a conventional manner. A handbrake 19 is provided for parking purposes. The trailer has two floor regions, a front raised floor 20 separated by a step 21 from a rear lower floor region 22. The front floor 20 is raised to accommodate the standard height of fixing via the articulated joint 12 to a tractor unit. It is however desirable when using the vehicle for goods distribution purposes to stack goods on both the floor regions 20 and 22. This particular example is particularly suited to the distribution of goods in packaged form and may be used for loading goods from a loading dock 23 at a warehouse and subsequent distribution at one or more locations such as supermarkets. The goods may be loaded onto the vehicle packed into crates or trolleys which are themselves rolled on wheels into the vehicle when loading and rolled out again when unloading.

In accordance with the present invention, the interior of the vehicle is provided with an additional platform 24 which can be raised or lowered within the vehicle to provide an additional floor to permit stacking in more than one tier within the vehicle. In this particular example, the platform comprises a base member 25 of generally rectangular form extending across the full width of the vehicle and along the full length of the rear lower floor section 22. The platform 24 is provided with retaining sides 26 formed as an open framework together with a similar front retaining wall 27 and a hinged rear wall 28 capable of acting as a bridge between the platform 24 and a dock 23. The platform is supported on four vertical support members two on each side of the platform. The support members include two front support members 30 and two rear support members 31. Each of the support members is mounted at its lower end on the chassis of the vehicle immediately inside the side walls of the housing 17. The upper ends of the support members are interconnected by tie members 32 extending longitudinally and 33 extending transversely across the vehicle.

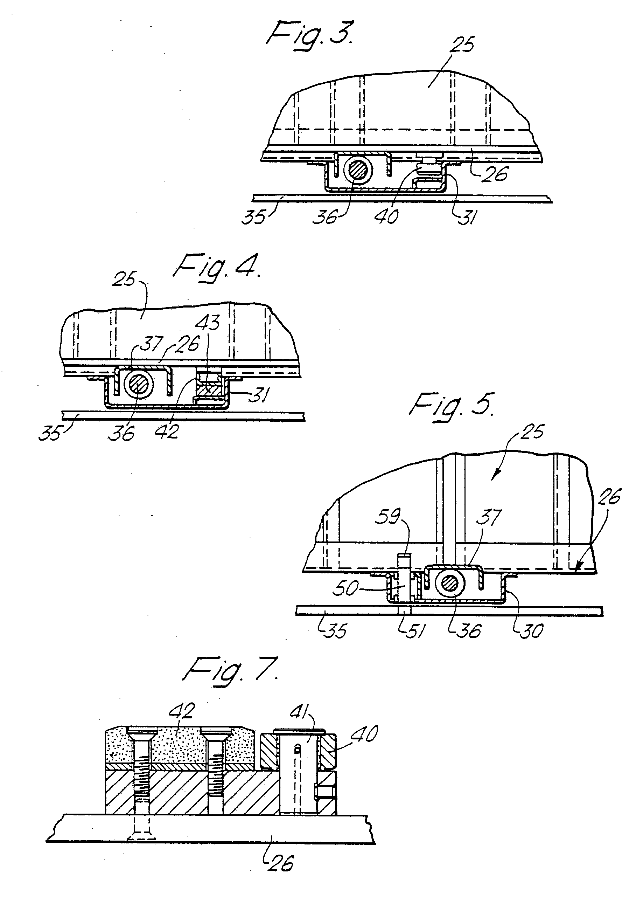

Each of the support members extends vertically throughout substantially the full height of the interior of the vehicle and as can be seen from Figures 3, 4 and 5 which each show a scrap section taken in a horizontal plane, the support members 30 and 31 each comprises a similarly shaped channel member located close to the outer wall 35 of the housing 17 so that the channel faces inwardly towards the platform 24 and contains a vertically extending hydraulic piston and cylinder 36. The lower end of the cylinder of each hydraulic unit 36 is mounted near the bottom of the support member 30 or 31 and the upper end of its projecting piston is connected to the upper end of a further channel member 37 which extends vertically within the channel of the support member 30 or 31. In this way, the piston of each hydraulic unit lies between the channel members 37 and the supporting members 30 or 31. The lower end of the base of each channel member 37 is secured to the sides 26 of the platform 24. In this way, the platform 24 is attached to the pistons of each of the four hydraulic units 36 so that operation of the hydraulic units can raise the platform when required.

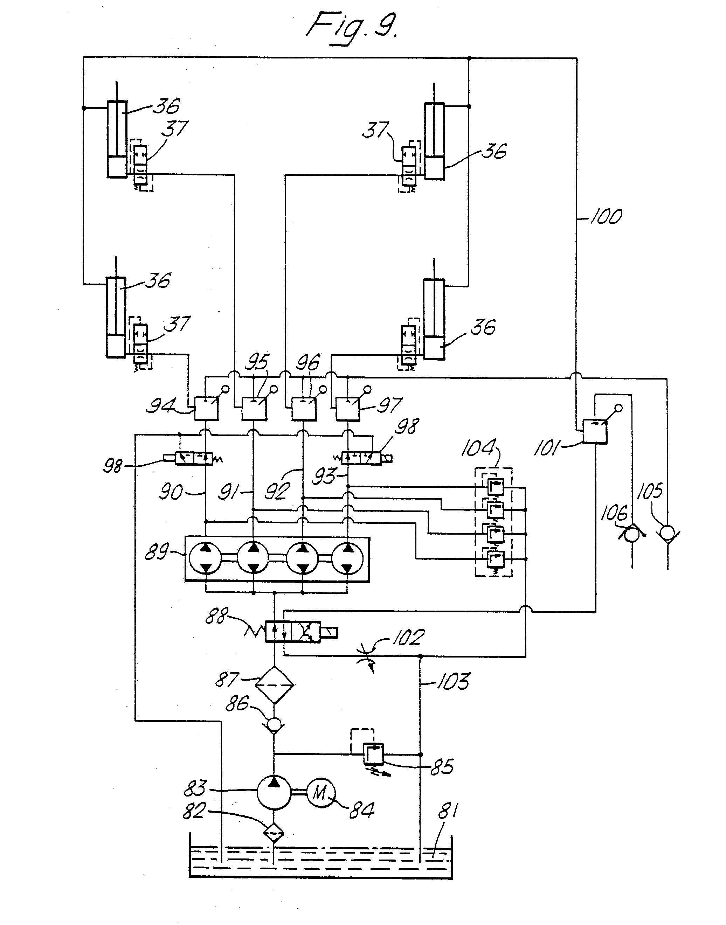

In order to guide the upwards and downwards movement of the platform 24, the sides 26 of the platform are provided with a guide and location unit as shown in Figure 7, adjacent each of the support members 30 and 31. Each of these units consists of a roller 40 arranged to rotate about a horizontal pin 41 and a bearing pad 42. The unit is fixed to the side 26 of the platform with the bearing pad 42 vertically above the roller 40.

Similarly, the interior of the channel member of each of the support members 30 and 31 is provided with a fixed bearing pad 43 adjacent the upper and lower limit positions of movement of the platform 24 so that when in these limit positions the bearing pad 42 fixed to the side of the platform 24 engages the bearing pad 43 within the support member 30, 31 thereby providing lateral location of the platform position. To provide longitudinal location, the channel member of each support members 30, 31 has a channel member arranged to provide a vertical guiding surface for engagement of the roller 40 during the upwards and downwards movement of the platform. In the case of the front supports 30, the roller 40 and pad 42 are located in front of the hydraulic piston and cylinder so that the roller 40 engages the front wall of the support 30. In the case of the rear support members 31 the unit of Figure 7 is located to the rear of the hydraulic piston and cylinder 36 so that the roller 40 engages the rear wall of the channel forming the support member 31. This can be clearly seen from Figures 3 and 4 which show the position of the roller 40 as well as the engagement of the bearing pad 42 with the pad 43.

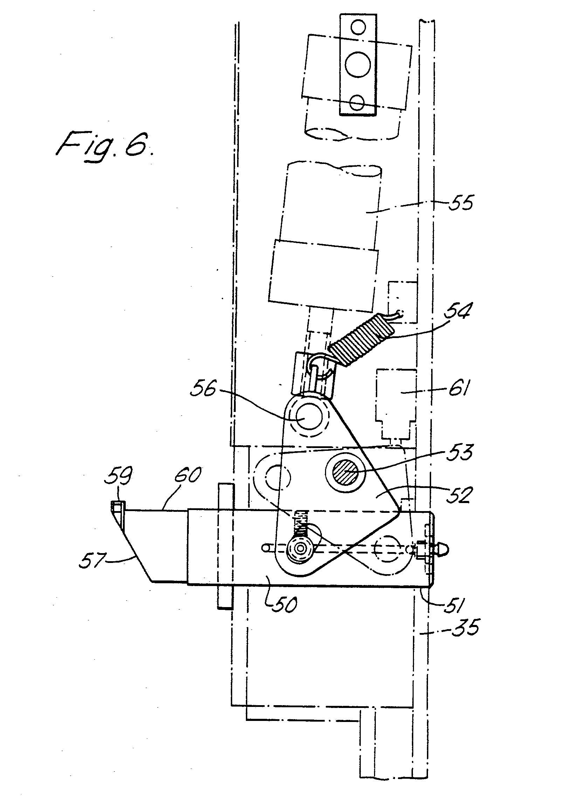

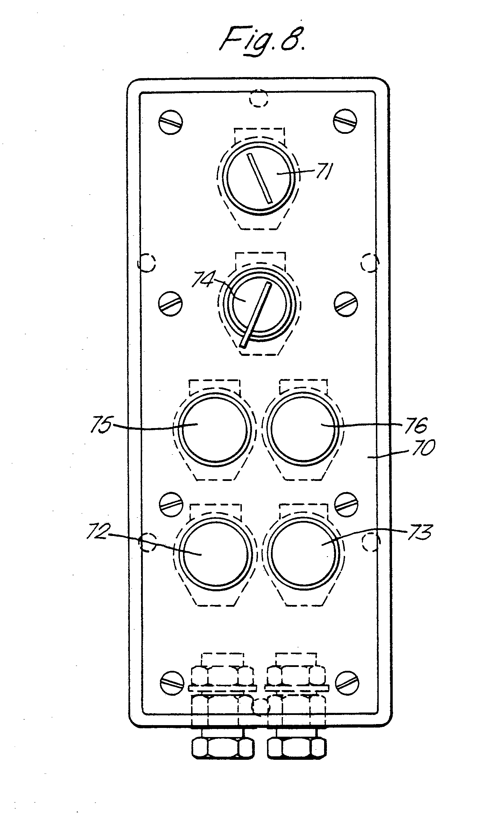

For safety purposes in holding the platform 24 securely in its raised position, each of the support members 30 and 31 is provided with a locking pin arrangement of the type shown in Figures 5 and 6. Each unit consists of a cylindrical pin 50 housed within the channel member forming the support 30, 31 as shown in Figure 5. The pin is arranged to move horizontally between a retracted position in which the platform is free to be lowered and an extended position in which it engages an aperture in the side of the platform 24 to prevent lowering of the platform. The outer end of each pin 50 is located adjacent a hole 51 in the side wall 35 of the housing 17 so that the vehicle operator can see from outside the vehicle housing whether the locking pins are retracted or not. Each pin 50 is mounted between two triangular plates 52 on opposite sides of the pin, each plate 52 being rotatable about a horizontal axis 53. The upper end of each plate 52 is connected to a tension spring 54 secured to the wall of the support member 30, 31 and is arranged to urge the plates 52 to rotate in a clockwise direction around the axis 53 as seen in Figure 6 so as to cause the pins 50 to be extended into a locking position. The channel of each support member 30, 31 houses a pneumatic piston device 55 immediately above the locking pin 50 and this piston device is arranged to act on a pin 56 joining the two plates 52 of each locking pin unit so that when the pneumatic piston device is actuated to extend its piston causes the plates 52 to move in an anticlockwise direction, as seen in Figure 6, thereby moving the pins 50 to a retracted position against the action of the springs 54. This causes the outer end of the pins 50 to be visible through the apertures 51 from the exterior of the housing of the vehicle.

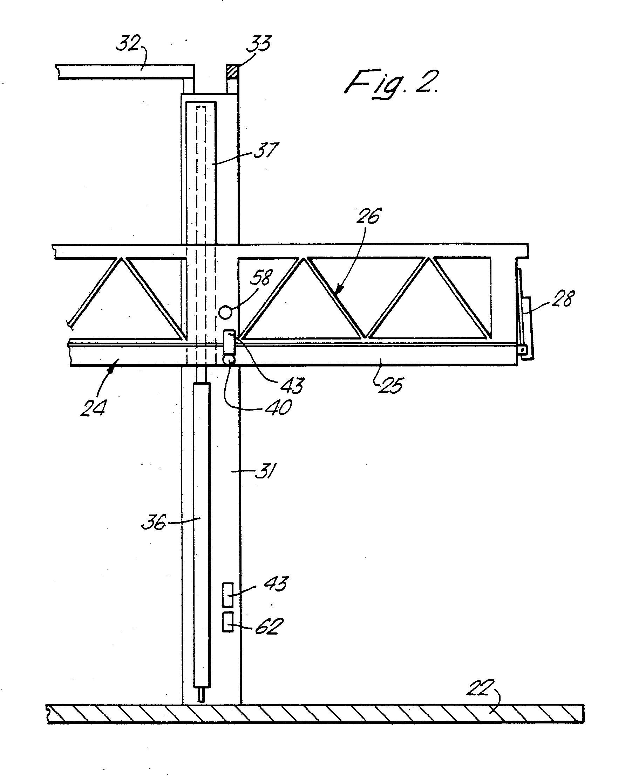

Each pin 50 is provided at its inner end with a bevelled face 57 arranged so that in normal use, no power is supplied to the pneumatic piston 55 and as the platform 24 is raised by the hydraulic units, it encounters the projecting locking pins 50 but due to engagement of the bevelled face 57 with the sides of the platform, the upward movement of the platform causes the pins to be moved into a retracted position by movement of the platform. The sides 26 of the platform are provided with a locking pin aperture 58 which can be seen in Figure 2 and when the platform has reached its upper position, the pins 50 are caused to extend into the mating apertures 58 in the platform 24 due to action of the springs 54. The inner end of each pin is provided with an upstanding lip 59. Once the pins 50 have been extended into a locking position so that they pass through the apertures 58 in the platform, hydraulic pressure ceases to be applied to the hydraulic units 36 and this causes the platform to rest on the locking pins 50 with the mating part of the platform lying in a recessed region 60 immediately outside the lip 59. The lip 59 thereby projects upwardly preventing retraction of the pin 50 to a disengaged position from the platform 24 until hydraulic pressure has been reapplied to the units 36 to cause the platform to rise slightly and cause the apertures 58 in the platform to lie just clear of the upstanding lip 59. Once that hydraulic pressure has been reapplied, the pneumatic pistons 55 may be operated to retract the pins 50 and then allow the platform to be lowered under the control of hydraulic pressure in the hydraulic units 36.

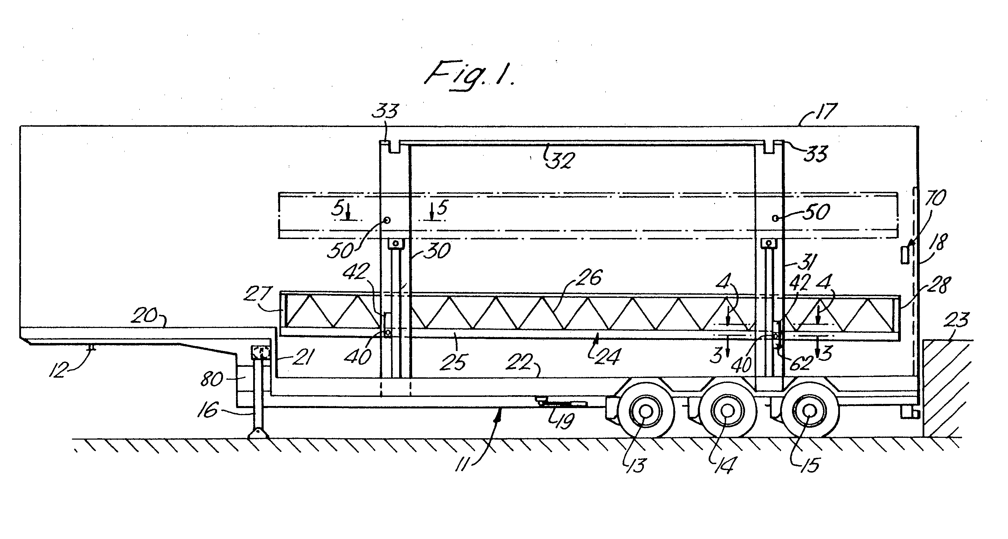

The locking pin units shown in Figure 6 are each provided with a microswitch 61 arranged to be contacted by the plates 52 when the pin is in the retracted position (a second microswitch, not shown, is located so as to be contacted by the plates 52 when the pin is in the extended position) so as to provide electrical signals to a control unit which will be described below. One of the rear support units 31 has a microswitch unit located within its channel member in the path of the roller 40 as the platform reaches its lowermost position. This is indicated schematically by the numeral 62 in Figures 1 and 2. The microswitch is not provided on the front support elements 30 and it is used to enable tilting of the platform as will be described below.

The operation of the platform is controlled by a control unit 70 which is normally mounted near the rear of the vehicle as indicated in Figure 1 so that it is readily available for access by a vehicle operator. The unit is shown more fully in Figure 8 and consists of a power on/off supply switch 71. Push buttons 72 and 73 are provided to raise or lower the platform respectively. A changeover switch 74 is provided to cause the locking pins 50 to be engaged or released and illuminated indicators 75 and 76 are provided to indicate whether the pins are locked or released.

The hydraulic unit is shown more fully in Figure 9 and the hydraulic supply and valves are mounted in a recess 80 at the front end of the vehicle. The hydraulic supply consists of a hydraulic tank 81 having a supply line leading through a filter 82 to a pump 83 driven by a motor 84. The outlet of the pump 83 has a return line leading through a pressure relief valve 85 to the tank 81. The supply line from the pump 83 passes through a nonreturn valve 86 and filter 87 to a directional control valve 88 under the control of the raise or lower buttons 72 and 73 on the control unit shown in Figure 8. During the raise operation, pressurised fluid is provided by the valve 88 to a four-way flow divider 89 arranged to provide balanced flow to each of the four hydraulic cylinders 36. The divider 89 has four separate outlet lines 90, 91, 92 and 93 leading respectively to emergency changeover valves 94, 95, 96 and 97. Valves 95 and 96 are connected directly to the hydraulic cylinders 36 at the rear of the platform. The valves 94 and 97 are connected to the hydraulic units 36 at the front of the platform. Lines 90 and 93 which supply hydraulic fluid for the front units 36 each include a tilt control valve 98 operable in response to the microswitch 62 located on the rear support member 31. Each of the hydraulic cylinders 36 is provided with a safety valve 37 on its inlet so as to avoid uncontrolled flow of fluid from within the cylinder in the event of a hose burst or other uncontrolled leak. Each of the hydraulic cylinders 36 has an outlet connected to an exhaust line 100 which leads through an emergency changeover valve 101 back to the directional control valve 88. When the valve 88 is changed by operation of the lower switch 73 on the control unit, hydraulic fluid is allowed to exhaust from the cylinders 36 back to the tank 81 via a flow regulator 102 and line 103. The pressure lines 90, 91, 92 and 93 each have a connection to a circuit relief valve unit 104 to provide a return flow path via line 103 to the tank 81. Each of the emergency changeover valves 94, 95, 96 and 97 has a manually controlled lever to allow disconnection from the flow divider 89 and selective connection of each valve to an emergency hydraulic supply 105. Similarly the emergency changeover valve 101 can be operated by a manual lever to connect the exhaust line 100 to an emergency exhaust port 106 rather than to the tank 81.

The tank 81, pump 83, motor 84, flow divider 89 and valves 94, 95, 96, 97 and 101 are all housed in the recess 80 shown in Figure 1 so that they are accessible by an operator of the vehicle. Hydraulic fluid pressure lines lead from each of the valves 94, 95, 96, 97 and 101 along the chassis of the vehicle to the respective hydraulic unit 36. The pneumatic piston for each locking pin unit is connected by an air supply line extending within the channel member of each support 30, 31 to the pressurised air reservoir on the vehicle.

In use, the platform is lowered to the position shown in Figure 1 where it may be tilted so that the rear of the platform is lower than the front of the platform as indicated in Figure 1. This is to accommodate difference in height between the level of the loading dock 23 and the front floor region 20 of the interior of the semi-trailer. Due to the standard attachment for semi-trailers to tractor units, the height of the front floor of the semi-trailer is commonly 1.5 metres above the ground. The height of the loading dock may well be less than this and may for example be 1.37 metres above the ground. To assist in loading from the dock 23 onto the front floor region 20 the platform 24 is lowered to its lowest extent on both the front and rear hydraulic units and this is the position shown in full lines in Figure 1. The goods may then be wheeled directly from the loading dock 23 onto the platform 24 and pushed along the platform 24. The rear of the platform is on the same level as the dock 23 whereas the front of the platform 24 is on the same level as the floor 20. The goods may thereby be wheeled directly along the length of the platform onto the front floor 20. When the front floor region 20 has been suitably loaded with goods the platform may itself be loaded with goods and then moved to the raised position. When the raise button 72 in the control unit is operated, this causes hydraulic fluid to be supplied by the pump 83 through the flow divider 89 to the lines 90, 91, 92 and 93. However, while the platform is in the position shown in Figure 1, the microswitch 62 is operated by the roller 40 which engages it to cause the valves 98 to switch the fluid supply away from the valves 94 and 97 back to the tank 81. In this way, no hydraulic pressure is applied to the cylinders 36 at the front of the platform although hydraulic pressure is supplied via lines 91, 92 and the valves 95, 96 to the hydraulic cylinders at the rear of the platform. This causes the rear of the platform to be moved upwardly until the platform reaches a level position. The engagement of the roller 40 with the microswitch 62 is arranged such that the switch is actuated when the platform reaches the level position and this causes the valves 98 to switch hydraulic supply back to the valves 94 and 97 as well as the valves 95 and 96. In this way hydraulic supply is then applied to all four cylinders 36 simultaneously and the platform is raised in a level position up to the upper position shown in dotted lines in Figure 1. As the platform moves past the locking pins it initially pushes the pins out of the path of the platform until the mating holes 58 in the sides of the platform are aligned with the pins at which time the pins are spring urged back into a projecting position thereby locking the platform in the upper position. Hydraulic supply is then terminated and the platform is held in the upper position. Goods may then be lowered onto the lower rear floor 22 of the vehicle with safety for the operator. Not only is the platform held by the locking pins, but the locking pins cannot be retracted due to the function of the lips 59 until hydraulic pressure is reestablished in the cylinders 36. Once the vehicle has been loaded, the rear access door may be closed and the vehicle connected to a tractor unit, if not already connected, and used for distribution.

The procedure is generally reversed when wishing to unload the vehicle. When the control button 73 is operated to lower the platform, the platform initially is lowered in a level condition until the front end reaches the lower limits of travel. The rear hydraulic units are however able to allow continued downward movement of the rear of the platform until the platform reaches the same tilted position shown in Figure 1. The platform then assists in ready unloading of goods from the front floor region 20 in the same way as was previously described for loading.

It will be appreciated that the invention is not limited to the details of the foregoing example. The extent to which the front and rear hydraulic units are arranged to tilt the platform may be varied to suit the particular loading heights used relative to the floor levels within the vehicle. The use of locking pins which cannot be released until hydraulic pressure is reestablished in the hydraulic cylinders provides additional safety. Furthermore, the provision of locking pins which are arranged to project through the four apertures in the exterior of the vehicle housing when disengaged from a locking position enable the operator to provide a simple visual check on the safety of the platform locking before working in the vehicle with a raised platform. The locking means may be provided with a plurality of lockable positions. whereby the height at which the platform is locked in position may be varied.

The vehicle housing may be rigid or non-rigid and may for example be curtain sided. When curtain sided, the combination of roller 40 and microswitch 62 would be replaced by other suitable sensing means such as for example a proximity switch. In the event of any failure by the normal hydraulic system through the pump 83, the manual controls on the valves 94, 95, 96, 97 and 101 may be suitably adjusted and by connection of the ports 105 and 106 to an emergency hydraulic supply, the four hydraulic cylinders 36 can be separately operated and adjusted to provide any required change in position of the platform.

**Claims**

1. A vehicle for distributing and transporting goods, said vehicle having a housing (17) providing an enclosure with a rear access opening (18) to permit loading and unloading of goods, said housing being provided with a floor on which goods may be loaded, said floor comprising a front region (20) at a first level and a rear region (22) at a second lower level, and a platform (24) providing an additional support within the housing on which goods may be loaded, said platform being adjustable in height between a lowered position in which goods may be loaded or unloaded through said access opening onto or from said platform, and a raised position thereby permitting more than one tier of goods within the housing, support means (30, 31) fixed relative to said housing for supporting the front and rear ends of the platform when in the raised position, characterised by first drive means (36) for lifting the front (27) of the platform (24) and second drive means (36) for lifting the rear (28) of the platform, the first and second drive means being arranged to provide different extent of travel for the front and rear of the platform whereby in the raised position the platform may be horizontal providing an additional support level and in the lowered position the platform may be tilted with the front of the platform adjacent said first level spaced above the second level to permit use of the platform in loading onto the front region of the floor from a loading level at the rear of the vehicle which is not level with said front region of the floor.

2. A vehicle according to claim 1 including locking means arranged to provide a stop device movable between an extended position in which it holds the platform in the raised position and a retracted position in which the platform is free to be moved from the raised to the lowered position, said stop device including means to prevent retraction to allow lowering of the platform until said drive means applies upward lift to the platform.

3. A vehicle according to claim 2 in which said drive means includes four piston and cylinder devices, two on each side of the platform.

4. A vehicle according to any one of the preceding claims in which said platform is movable substantially vertically up and down relative to a plurality of upstanding support elements fixed within said housing said support elements including guide means for guiding the upward and downward movement of the platform.

5. A vehicle according to claim 4 in which said locking means comprise a plurality of stop devices each comprising a retractable locking pin mounted on one of said support elements, each said locking pin having an inner end arranged to extend inwardly past a mating part of the platform or a member carried thereby, when extended.

6. A vehicle according to claim 5 in which each locking pin has at its inner end a projection arranged, when the pin is extended, to engage said mating part of the platform or member carried thereby, and to prevent retraction of the pin until the platform is moved to clear the projection by application of upward lift by the said drive means.

7. A vehicle according to claim 5 or claim 6 in which pneumatic means are provided to retract each locking pin against spring means when it is required to lower the platforms from said raised position.

8. A vehicle according to claim 6 or claim 7 in which each locking pin is provided with a tapered surface at said inner end to permit movement of the pin to the retracted position by upward movement of the platform past said pin.

9. A vehicle according to any one of the preceding claims in which said platform comprises a base with upstanding side members and a movable rear wall which may be moved to permit unobstructed access to the platform to allow rolling access for goods onto the platform when in the lowered position and may be moved to provide a retaining wall to maintain goods on the platform after loading.

10. A vehicle according to any one of the preceding claims in which the drive means at the rear of the platform has a greater extent of travel than the drive means at the front of the platform to allow the rear of the platform to lie in a lower position than the front of the platform but spaced above the lower rear floor region.

11. A vehicle according to any one of the preceding claims in which switch means is located, so as to respond to movement of the rear end of the platform, said switch means being arranged to control operation of the drive means which lifts the front of the platform so that when raising the platform the drive means acting on the front of the platform is actuated after a predetermined extent of travel of the rear of the platform.

12. A vehicle according to claim 4 in which said platform is provided with roller means for engaging said guide means to assist in guiding the platform movement.

13. A vehicle according to claim 12 in which said roller is arranged to locate the position of the platform in the longitudinal direction of the vehicle.

14. A vehicle according to claim 13 including locating means positioned between said guide means and the platform to locate the platform in a lateral position when in the raised and lowered positions.

15. A vehicle according to any one of claims 5 to 8 in which said housing is provided with apertures adjacent said locking pins and the locking pins are arranged to extend outwardly through said apertures when the pins are disengaged from the platform whereby an operator can detect from the outside of the housing whether the pins are engaged with the platform.

16. A vehicle according to any one of the preceding claims comprising a semi-trailer unit for attachment to a tractor unit.

**Patentansprüche**

1. Fahrzeug zum Verteilen und Transportieren von Waren, das mit einem Aufbau (17), der als Behälter dient, versehen ist, und der eine rückseitige Öffnung (18) zum Laden und Entladen von Waren besitzt, wobei der Aufbau einen Boden, auf den Waren geladen werden können, der aus einem vorderen Teil (20) auf einer ersten Ebene und aus einem hinteren Teil (22) auf einer zweiten niedrigeren Ebene besteht, und eine Plattform (24) aufweist, die innerhalb des Aufbaus eine zusätzliche Unterlage darstellt, auf die Waren geladen werden können, wobei die Plattform in der Höhe zwischen einer unteren Position, in der Waren durch die rückseitige Öffnung auf die Plattform geladen oder von der Plattform entladen werden können, und einer oberen Position verstellbar ist, wodurch mehr als eine Lage von Waren im Aufbau ermöglicht wird, mit Stützen (30, 31), die relativ zum Aufbau fixiert sind, um das vordere und hintere Ende der Plattform in der angehobenen Stellung zu tragen, gekennzeichnet durch eine erste Antriebseinrichtung (36) zum Heben des vorderen Teils (27) der Plattform (24) und durch eine zweite Antriebseinrichtung (36) zum Heben des rückwärtigen Teils (28) der Plattform, wobei die erste und zweite Antriebseinrichtung angebracht sind, um ein unterschiedliches Anheben des vorderen und rückwärtigen Teils der Plattform zu ermöglichen, wodurch die Plattform in der angehobenen Position horizontal sein kann, somit eine zusätzliche Unterlage darstellt, und in der abgesenkten Position so geneigt sein kann, daß das vordere Ende der Plattform nahe der ersten Ebene oberhalb der zweiten Ebene liegt und somit eine Benutzung der Plattform zum Beladen des vorderen Teils des Bodens von einer Ladeebene im hinteren Teil des Fahrzeugs aus ermöglicht, die nicht auf der gleichen Ebene mit dem Boden des vorderen Teils des Bodens liegt.

2. Fahrzeug nach Anspruch 1, das eine Sperrvorrichtung enthält, die so angebracht ist, daß sie eine zwischen einer ausgefahrenen Position, in der sie die angehobene Plattform hält, und einer eingefahrenen Position, in der die Plattform von der angehobenen zur abgesenkten Position frei bewegt werden kann, bewegliche Blockiereinrichtungen bildet, wobei die Blockiereinrichtung eine Anordnung enthält, die ein Einfahren verhindert, um ein Absenken der Plattform zu ermöglichen, bis die Hebeeinrichtung die Plattform anhebt.

3. Fahrzeug nach Anspruch 2, bei dem die Hebeeinrichtung vier Hubzylinder enthält, zwei auf jeder Seite der Plattform.

4. Fahrzeug nach einem der Ansprüche 1 bis 3, bei dem die Plattform im wesentlichen vertikal nach oben und unten relativ zu mehreren nach oben stehenden Stützelementen verfahrbar ist, die innerhalb des Aufbaus befestigt sind und Führungseinrichtungen für die Aufwärts- und Abwärtsbewegung der Plattform aufweisen.

5. Fahrzeug nach Anspruch 4, bei welchem die Sperrvorrichtung aus mehreren Blockiereinrichtungen besteht, von denen jede aus einem einziehbaren Sperrstift besteht, der an einem der Stützelemente angebracht ist, wobei jeder Sperrstift ein Innenteil besitzt, das sich in ein passendes Gegenstück der Plattform oder eines daran angebrachten Teiles einschiebt, wenn es ausgezogen wird.

6. Fahrzeug nach Anspruch 5, bei dem am Innenteil jedes Sperrstiftes ein Vorsprung angebracht ist, der, wenn das Element ausgezogen wird, in das passende Gegenstück der Plattform oder des daran angebrachten Teils eingreift und so das Zurückziehen des Stiftes verhindert, bis die Plattform mittels der Antriebseinrichtung angehoben wird und dadurch den Vorsprung freigibt.

7. Fahrzeug nach Anspruch 5 oder 6, bei dem eine Pneumatik vorgesehen ist, um jeden Sperrstift gegen eine Federeinrichtung zurückzuziehen, wenn die Plattform von der angehobenen Position aus abgesenkt werden muß.

8. Fahrzeug nach Anspruch 6 oder 7, bei dem das Innenteil jedes Sperrstiftes mit einer Abschrägung versehen ist, so daß die Aufwärtsbewegung der Plattform an diesem Stift vorbei zu einer Bewegung des Stiftes in die eingezogene Position führt.

9. Fahrzeug nach einem der vorhergehenden Ansprüche, bei dem die Plattform eine Basis mit hochstehenden Seitenteilen und eine bewegliche Rückwand aufweist, die so bewegt werden kann, daß sich ein freier Zugang zur Plattform ergibt, um in der abgesenkten Position Waren auf die Plattform zu rollen, und die so bewegt werden kann, daß sie nach dem Laden als Stützwand zum Halten von Waren auf der Plattform dient.

10. Fahrzeug nach einem der vorhergehenden Ansprüche, bei dem die Antriebseinrichtung für den rückwärtigen Teil der Plattform einen größeren Verfahrweg hat als die Antriebseinrichtung für den vorderen Teil der Plattform, wodurch der rückwärtige Teil der Plattform in einer Position sein kann, die unterhalb der Höhe des vorderen Teils der Plattform, aber über der unteren hinteren Bodenfläche liegt.

11. Fahrzeug nach einem der vorhergehenden Ansprüche, bei dem eine Schalteinrichtung so angebracht ist, daß sie auf die Bewegung des rückwärtigen Teils der Plattform anspricht, und daß sie die Funktion der Antriebseinrichtung für das vordere Ende der Plattform steuert, so daß beim Anheben der Plattform die Antriebseinrichtung für deren vorderen Teil aktiviert wird, nachdem sich der rückwärtige Teil der Plattform um einen vorbestimmten Weg bewegt hat.

12. Fahrzeug nach Anspruch 4, bei dem an der Plattform eine Rollführung angebracht ist, die in die Führungseinrichtungen eingreift, so daß die Führung der Plattformbewegung unterstützt wird.

13. Fahrzeug nach Anspruch 12, bei dem die Rollführung so angebracht ist, daß sie die Position der Plattform in der Längsrichtung des Fahrzeugs festlegt.

14. Fahrzeug nach Anspruch 13 das mit Positionierelementen versehen ist, die zwischen den Führungseinrichtungen und der Plattform angebracht sind, um die Plattform in der angehobenen und abgesenkten Stellung in seitlicher Richtung festzulegen.

15. Fahrzeug nach einem der Ansprüche 5 bis 8, bei dem der Aufbau Öffnungen für die Sperrstifte besitzt und bei dem die Sperrstifte so angebracht sind, daß sie durch die Öffnungen nach außen hervorstehen, wenn die Stifte von der Plattform gelöst sind, wodurch eine Bedienungsperson außerhalb des Aufbaus erkennen kann, ob die Stifte in die Plattform eingreifen.

16. Fahrzeug nach einem der vorhergehenden Ansprüche, das aus einem Auflieger. zur Befestigung an einer Zugmaschine besteht.

**Revendications**

1. Véhicule pour la distribution et le transport de marchandises, ledit véhicule comportant une caisse (17) formant une enceinte présentant une ouverture d'accès arrière (18) pour permettre le chargement et le déchargement de marchandises, ladite caisse comportant un plancher sur lequel des marchandises peuvent être chargées, ledit plancher comprenant une zone avant (20) située à un premier niveau et une zone arrière (22) située à un second niveau inférieur, et une plate-forme (24) constituant un support supplémentaire à l'intérieur de la caisse, sur lequel des marchandises peuvent être chargées, ladite plate-forme étant réglable en hauteur entre une position abaissée dans laquelle des marchandises peuvent être chargées sur ladite plate-forme ou en être déchargées en passant par ladite ouverture d'accès, et une position élevée permettant ainsi plus d'un rang de marchandises dans la caisse, des moyens (30, 31) de support fixes par rapport à ladite caisse, destinés à supporter les extrémités avant et arrière de la plate-forme lorsqu'elle est dans la position élevée, caractérisé par des premiers moyens d'entraînement (36) destinés à faire monter l'avant (27) de la plate-forme (24) et des seconds moyens d'entraînement (36) destinés à faire monter l'arrière (28) de la plate-forme, les premier et second moyens d'entraînement étant agencés de façon à permettre à l'avant et à l'arrière de la plate-forme de se déplacer sur des distances différentes afin que, dans la position élevée, la plate-forme puisse être horizontale, formant un niveau de support supplémentaire, et que, dans la position abaissée, la plate-forme puisse être inclinée, l'avant de la plateforme étant adjacent audit premier niveau, à une certaine distance audessus du second niveau pour permettre à la plate-forme d'être utilisée pour le chargement sur la zone avant du plancher à partir d'un niveau de chargement, à l'arrière du véhicule, qui n'est pas de niveau avec ladite zone avant du plancher.

2. Véhicule selon la revendication 1, comprenant des moyens de verrouillage agencés de façon à constituer un dispositif de butée mobile entre une position d'extension dans laquelle il maintient la plate-forme dans la position élevée et une position de retrait dans laquelle la plate-forme peut être déplacée librement de la position élevée vers la position abaissée, ledit dispositif de butée comprenant des moyens destinés à empêcher le retrait pour permettre l'abaissement de la plate-forme avant que lesdits moyens d'entraînement appliquent une force élévatrice à la plate-forme.

3. Véhicule selon la revendication 2, dans lequel lesdits moyens d'entraînement comprennent quatre dispositifs à piston et cylindre, deux de chaque côté de la plate-forme.

4. Véhicule selon l'une quelconque des revendications précédentes, dans lequel ladite plate-forme peut exécuter des mouvements sensiblement verticaux de montée et de descente par rapport à plusieurs éléments montants de support fixés à l'intérieur de ladite caisse, lesdits éléments de support comprenant des moyens de guidage destinés à guider les mouvements de montée et de descente de la plate-forme.

5. Véhicule selon la revendication 4, dans lequel lesdits moyens de verrouillage comprennent plusieurs dispositifs de butée comprenant chacun une broche rétractable de verrouillage montée sur l'un desdits éléments de support, chacune desdites broches de verrouillage ayant une extrémité intérieure agencée de façon à faire saillie vers l'intérieur au-delà d'une partie complémentaire de la plate-forme ou d'un élément porté par celle-ci, lorsque cette broche est en extension.

6. Véhicule selon la revendication 5, dans lequel chaque broche de verrouillage comporte, à son extrémité intérieure, une saillie agencée de manière que, lorsque la broche est en extension, elle engage ladite partie complémentaire de la plate-forme ou de l'élément porté par celle-ci, et de manière à empêcher le retrait de la broche avant que la plate-forme soit déplacée pour se dégager de la saillie par l'application d'une force ascendante par lesdits moyens d'entraînement.

7. Véhicule selon la revendication 5 ou la revendication 6, dans lequel des moyens pneumatiques sont prévus pour rétracter chaque broche de verrouillage à l'encontre des moyens à ressorts lorsqu'il est nécessaire de faire descendre la plate-forme à partir de ladite position élevée.

8. Véhicule selon la revendication 6 ou la revendication 7, dans lequel chaque broche de verrouillage présente une surface conique à ladite extrémité intérieure pour permettre un mouvement de la broche vers la position de retrait sous l'effet d'un mouvement de montée de la plate-forme au-delà de ladite broche.

9. Véhicule selon l'une quelconque des revendications précédentes, dans lequel ladite plate-forme comprend une embase portant des éléments latéraux montants et une paroi arrière mobile qui peut être déplacée pour permettre un accès libre à la plate-forme afin que des marchandises puissent accéder en roulant sur la plate-forme lorsqu'elle est dans la position abaissée, la paroi arrière pouvant être déplacée pour constituer une paroi de retenue destinée à maintenir les marchandises sur la plate-forme après le chargement.

10. Véhicule selon l'une quelconque des revendications précédentes, dans lequel les moyens d'entraînement situés à l'arrière de la plate-forme ont une étendue de course supérieure à celle des moyens d'entraînement situés à l'avant de la plate-forme afin de permettre à l'arrière de la plate-forme s'étendre dans une position inférieure à celle de l'avant de la plate-forme mais espacée au-dessus de la zone de plancher arrière et inférieure.

11. Véhicule selon l'une quelconque des revendications précédentes, dans lequel des moyens de commutation sont disposés de façon à réagir à un mouvement de l'extrémité arrière de la plate-forme, lesdits moyens de commutation étant agencés de façon à commander l'opération des moyens d'entraînement faisant monter l'avant de la plate-forme afin que, lorsqu'ils font monter la plate-forme, les moyens d'entraînement agissant sur l'avant de la plate-forme soient actionnés après une longueur de course prédéterminée de l'arrière de la plate-forme.

12. Véhicule selon la revendication 4, dans lequel ladite plate-forme comporte des moyens à galets destinés à engager lesdits moyens de guidage pour aider au guidage du mouvement de la plate-forme.

13. Véhicule selon la revendication 12, dans lequel lesdits galets sont agencés de façon à établir la position de la plate-forme dans la direction longitudinale du véhicule.

14. Véhicule selon la revendication 13, comprenant des moyens de positionnement disposés entre lesdits moyens de guidage et la plate-forme afin de placer la plate-forme dans une position latérale lorsqu'elle est dans les positions élevée et abaissée.

15. Véhicule selon l'une quelconque des revendications 5 à 8, dans lequel ladite caisse présente des ouvertures adjacentes auxdites broches de verrouillage et les broches de verrouillage sont agencées de façon à faire saillie vers l'extérieur en passant dans lesdites ouvertures lorsque les broches sont dégagées de la plate-forme, afin qu'un opérateur puisse détecter de l'extérieur de la caisse si les broches sont enclenchées avec la plate-forme.

16. Vehicule selon l'une quelconque des revendications précédentes, comprenant une semi-remorque destinée à être attelée à un tracteur.

Fig. 1.

0 153 032

Fig. 2.

0 153 032

Fig. 3.

Fig. 4.

Fig. 5.

Fig. 7.

3

Fig. 6.

55

54

56

61

53

52

59  60

57

50

51

35

Fig.8.

# Fig. 9.